# EUROPEAN PATENT SPECIFICATION

(11) **EP 3 431 884 B1**
(45) Date of publication and mention of the grant of the patent: **18.03.2020**
(21) Application number: 18184083.6
(22) Date of filing: 18.07.2018
(51) Int. Cl.: F24C 15/32, A21B 3/04

(54) **OVEN FOR COOKING FOODS**
OFEN ZUM KOCHEN VON LEBENSMITTELN
FOUR DE CUISSON POUR ALIMENTS

(30) Priority: 19.07.2017 IT 201700082197
(43) Date of publication of application: 23.01.2019
(73) Proprietor: Tecnoeka S.R.L., 35010 Borgoricco (PD) (IT)
(72) Inventor: PAPALE, Davide, I-35132 Padova (PD) (IT); LORA, Cristina, I-35010 Borgoricco (PD) (IT)
(74) Representative: Gallo, Luca

(56) References cited:
- EP-A1- 0 653 900
- EP-A1- 0 845 234
- EP-A1- 1 624 255
- EP-A2- 0 959 305
- US-A- 5 016 606

## Description

### Field of application

The present invention regards an oven for cooking foods according to the preamble of claim 1.

The present oven is inserted in the field of production of ovens, in particular ovens of professional type, and is adapted to be advantageously employed in the restaurant, gastronomy, pastry and bakery fields.

In particular, the present oven is intended to be advantageously used professionally for simultaneously cooking foods arranged on multiple pans arranged on top of each other.

### State of the art

Ovens for professional use are known on the market; they conventionally comprise a support structure containing a containment body with box-like body which at its interior delimits a heating chamber into which the foods to be cooked are intended to be introduced.

More in detail, the support structure comprises a lower wall, an upper wall and two facing lateral walls (placed orthogonally to connect the upper wall and the lower wall), which delimit the aforesaid heating chamber between them. The support structure also comprises a rear wall placed as a rear closure of the heating chamber.

The support structure is on the front provided with an opening for accessing the heating chamber in order to allow the introduction of the foods to be cooked into the heating chamber itself and in order to extract the foods from the latter upon completed cooking. A door hinged to the support structure is provided, which is movable to rotate around the pins of the hinges in order to close the access opening during the cooking of the foods.

The foods to be cooked are intended to be inserted in the heating chamber, arranged on multiple pans positioned on top of each other over multiple levels and supported for example by a pan-holder trolley.

The oven also comprises heating means adapted to heat the air inside the heating chamber, and one or more fans (in particular of centrifugal type), each of which arranged within the heating chamber and actuatable in order to generate a hot air flow which circulates inside the heating chamber itself in order to uniformly cook the foods. More in detail, each fan is positioned at the rear wall of the support structure and is fixed to a horizontal drive shaft mechanically connected to an electric motor actuatable to rotate the fan itself.

The heating means of the oven for example comprise an electrical heating element with circular form, arranged around the corresponding fan in order to heat the air flow generated by the fan itself.

Advantageously, the oven comprises a dividing separator arranged within the heating chamber and positioned in front of the fans in a manner such to delimit, with the rear wall of the support structure, a ventilation space in which the fans and the electrical heating elements are positioned.

The dividing separator is frontally provided with a plurality of ventilation openings in order to allow the air to pass which has been suctioned axially by the fan and additionally it defines, with the lateral walls of the heating chamber, two lateral slits for the circulation of the air thrust radially by the fan, in order to ensure that the air completes a path that hits the entire heating chamber of the oven.

In this manner, the air contained in the heating chamber passes through the ventilation openings made on the separator, suctioned by the fan and is radially thrust towards the lateral slits by the fan itself, in order to return into the heating chamber heated by the heating means placed around the fan.

Once the fan is rotated, the latter defines two partitions of the suction zone between the dividing separator and the rear wall: a high-pressure delivery zone placed laterally with respect to the dividing separator, in which the air is thrust by the fan in order to recirculate in the heating chamber, and a low-pressure suction zone placed frontally with respect to the fan, in which the rotation of the fan creates local reduced pressure for suctioning the air through the openings and for pushing it towards the heating means and towards the lateral slits.

In order to cook foods by means of the steam method, professional ovens for cooking foods are known on the market which in the technical jargon are termed combination steam ovens, provided (in addition to heating means and at least one fan) with water vapor production means in order to maintain the humidity within the heating chamber of the oven during the steam cooking of the foods.

The water vapor production means generally comprise a vertical distribution channel, normally a steel tube, positioned within the heating chamber in front of the fans. The water vapor production means also comprise a water supply source (e.g. a pump) hydraulically connected to the distribution channel and susceptible of supplying the latter with a water flow. More in detail, the distribution channel comprises a plurality of drain openings, each made at one of the fans and hence each opening faces the corresponding fan.

In operation, the water that crosses the distribution channel exits through the drain openings and is intercepted by the blades of the fans, which cause the atomization thereof following the impact force with the blades.

The water thus atomized is then radially thrust together with the air towards the heating means, transforming it into water vapor. In this manner, by adjusting the flow rate of water introduced by means of the supply source, it is possible to adjust the level of humidity within the heating chamber.

In order to reduce the humidity within the heating chamber, for example if the water vapor generated by the water vapor production means is excessively high or if the foods have released water vapor within the heating chamber during cooking, ovens for cooking foods are known that are provided with drying means, in order to insufflate dry external air within the heating chamber in a controlled manner.

Normally, ovens are known that are provided with drying means intended to be used if the cooking cycle provides for - after a normal, more humid cooking step (which can provide for the introduction or non-introduction of vapor in a forced manner by means of aforesaid water vapor generation means) - a drying step, in order to dry the cooked foods.

An example of an oven for cooking foods provided with the aforesaid drying means is described in the patent EP 0959305.

More in detail, the drying means comprise a ventilator placed outside the heating chamber and adapted to introduce ambient air (hence with low humidity with respect to that contained in the heating chamber) through an air inlet duct terminating with an opening made on the rear wall of the heating chamber at one of the slits delimited by the dividing separator and the lateral walls of the heating chamber, in order to introduce the dry air directly into the heating chamber, thrust by the air pressure imparted by the fan. In addition, the drying means comprise an outlet duct for the air that is extended starting from a second opening made on the rear wall at the other slit defined between the other lateral wall and the dividing separator.

In this manner, the opening in fluid connection with the ventilator for the introduction of air and the opening in connection with the outlet duct for the expulsion of vapor-loaded air are made at the aforesaid high-pressure zone, in order to allow on one hand an injection of external air directly into the heating chamber and on the other hand an expulsion of vapor-loaded air in a forced manner, caused by the pressure difference caused by the action of the fan with respect to the ambient pressure of the outlet duct. The oven for cooking foods described in EP 0959305 has in practice proven that it does not lack drawbacks.

The main drawback lies in the fact that the opening for introducing air by means of the ventilator is placed in the high-pressure zone, does not pass through the heating means and hence the air coming from the outside environment is directly introduced into the heating chamber where the pans are positioned bearing the foods to be cooked. Therefore, the air thus introduced is at low temperature and cools the foods, ruining the cooking thereof.

A further drawback lies in the fact that also the opening in fluid connection with the outlet duct is at the high-pressure zone. Consequently, if there are small openings in the heating chamber that involve an undesired entrance of external air inside the heating chamber, e.g. due to a poor attainment of the silicon sealing, the air inside the heating chamber would tend to exit through the outlet duct due to the pressure difference, altering the optimal conditions of humidity and temperature of the heating chamber.

Documents EP 1 624 255 A1 and EP 0 653 900 A1 disclose further relevant ovens with air circulation means.

### Presentation of the invention

In this situation, the problem underlying the present invention is therefore that of overcoming the abovementioned drawbacks by providing an oven for cooking foods according to claim 1. This oven allows uniformly cooking foods, in particular ensuring a precise regulation of the humidity within the heating chamber.

A further object of the present invention is to provide an oven for cooking foods which does not allow the undesired exchange of air with the outside environment, for example due to poor sealing.

A further object of the present invention is to provide an oven for cooking foods that is entirely reliable in operation.

A further object of the present invention is to provide an oven for cooking foods that is structurally simple and inexpensive to make.

### Brief description of the drawings

The technical characteristics of the invention, according to the aforesaid objects, can be clearly seen in the contents of the below-reported claims, and the advantages thereof will be more evident from the following detailed description, made with reference to the enclosed drawings, which represent a merely exemplifying and non-limiting embodiment of the invention, in which:
- figure 1 shows a front perspective view of the oven for cooking foods, object of the present invention;

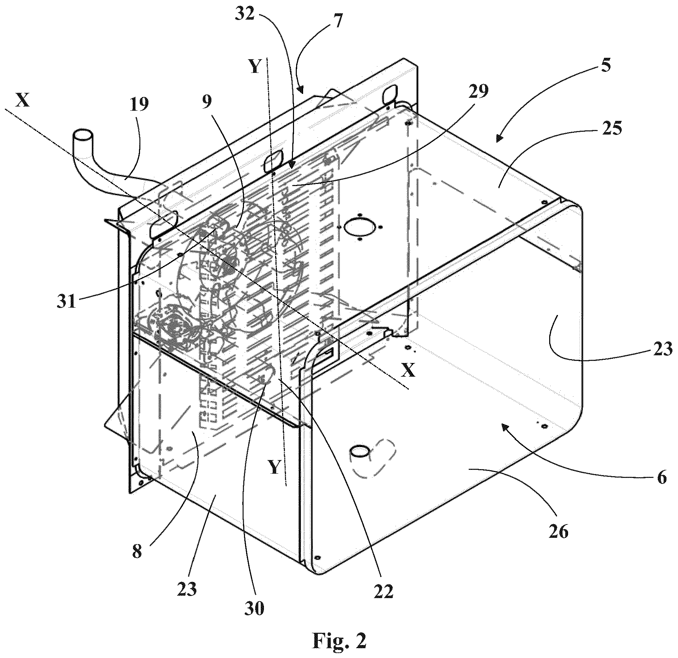

- figure 2 shows a front perspective view of a detail of the present oven, relative to a containment body defining a heating chamber;

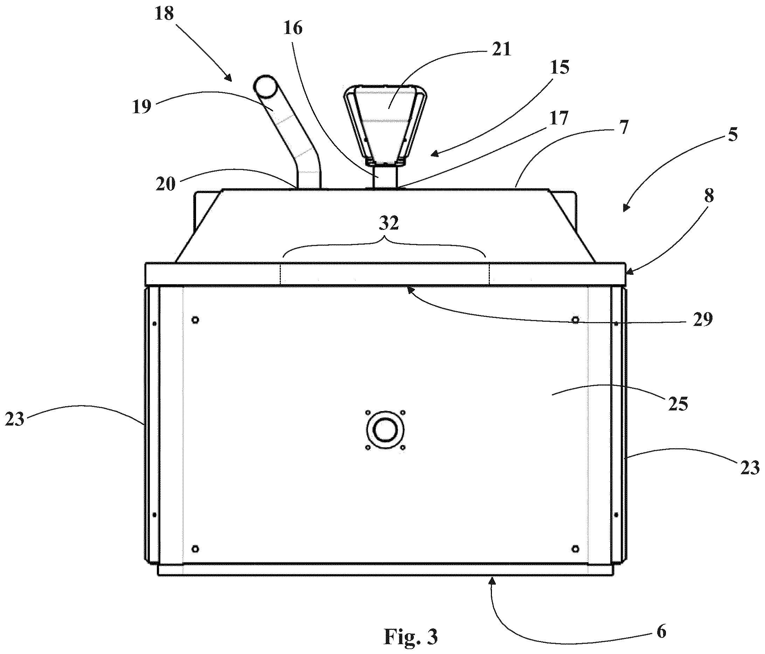

- figure 3 shows a top plan view of the containment body illustrated in figure 2;
- figure 4 shows a front view of the containment body illustrated in figure 2;

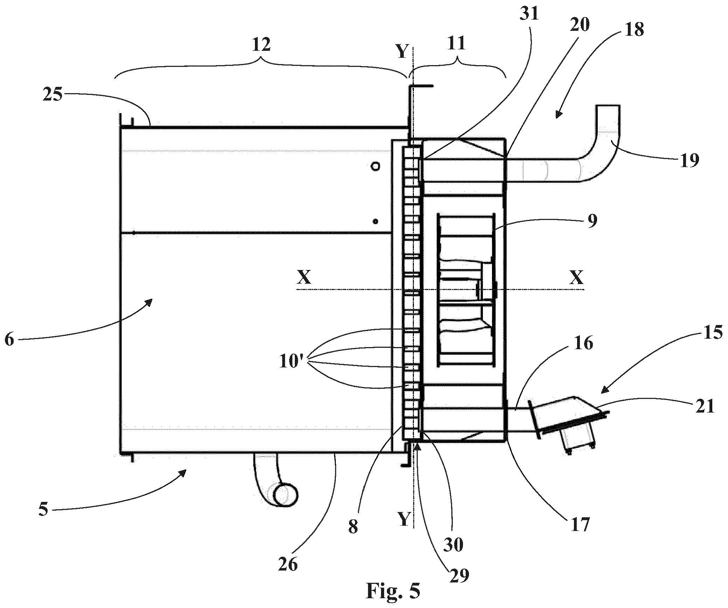

- figure 5 shows a sectional view of the containment body illustrated in figure 4 according to the trace V-V of figure 4 itself;

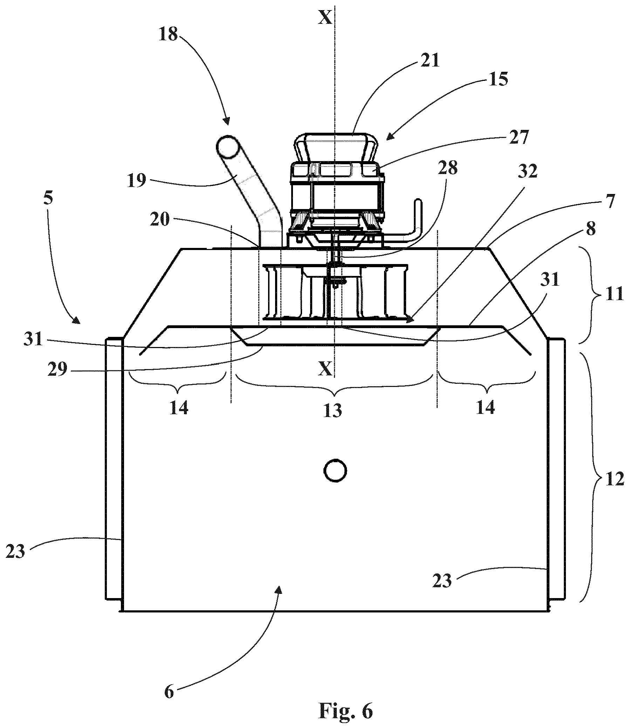

- figure 6 shows a top sectional view of the containment body illustrated in figure 4 according to the trace VI-VI of figure 4 itself.

### Detailed description of a preferred embodiment

With reference to the enclosed figures, reference number 1 overall indicates an embodiment of the oven for cooking foods, object of the present invention. Advantageously, the oven 1 is intended to be used, in particular professionally, in the restaurant, gastronomy, pastry and bakery fields, and for cooking foods in general.

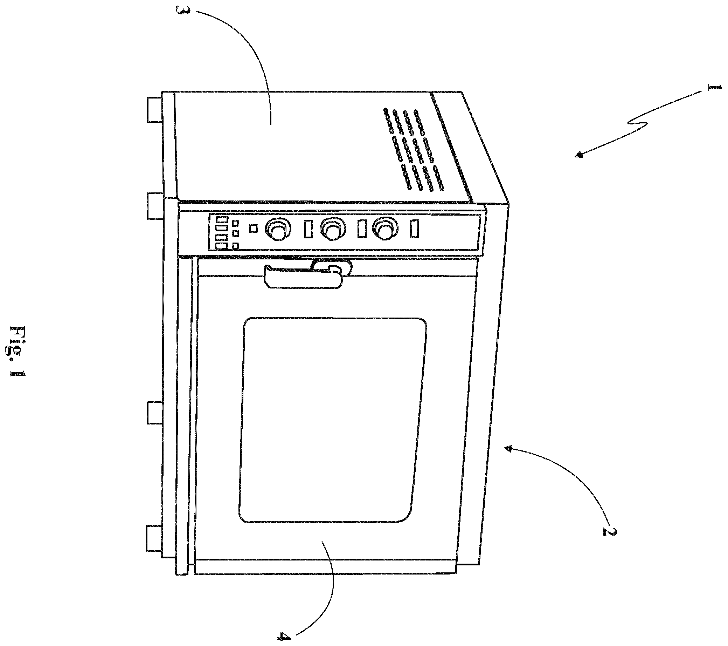

With reference to the embodiment illustrated in figure 1, the oven 1 comprises a support structure 2 preferably provided with an external framework 3 with substantially box-like shape and having an openable front side.

Advantageously, the oven 1 comprises a door 4 which is hinged to the support structure 2 and is movable for opening and closing the front side of the external framework 3.

With reference to the embodiments illustrated in the enclosed figures, the support structure 2 comprises a containment body 5 (preferably arranged within the external framework 3) which defines a heating chamber 6 within which the foods to be cooked are intended to be arranged.

Advantageously, the containment body 5 is provided with a front opening for accessing the heating chamber 6, preferably arranged at the front side of the external framework 3 of the support structure 2 of the oven 1.

Advantageously, the door 4 of the oven 1 is movable between a closed position, in which is obstructs the front opening of the containment body 5, and an open position, in which the front opening 7 is free of the door 4 in order to allow the introduction and the extraction of foods into and from the heating chamber 6.

The containment body 5, in particular with box-like body, is advantageously provided with an upper wall 25 and with a lower wall 26, preferably parallel to each other, between which the heating chamber 6 is extended height-wise.

The containment body 5 is provided with a rear wall 7, which is advantageously placed to connect between the upper wall 8 and the lower wall 9 and is preferably positioned as a rear closure of the containment body 5, in particular facing the front opening of the latter.

Preferably, the containment body 5 comprises two lateral walls 23, parallel to and facing each other, between which the heating chamber 6 is extended width-wise. The lateral walls 23 are placed to connect between the upper wall 8 and the lower wall 9 and are in particular extended between the rear wall 7 and the front opening orthogonal to the rear wall 7 itself.

According to the invention, the oven 1 comprises at least one fan 9, preferably of centrifugal type, arranged in the heating chamber 6 at the rear wall 7 and susceptible of rotating around a rotation axis X preferably orthogonal to the rear wall 7 itself. The fan 9 is actuatable in order to generate at least one internal air flow within the heating chamber 6, adapted to uniformly distribute the heat within the heating chamber 6 itself. The fan 9 is rotatably supported by a drive shaft 28 placed to cross the rear wall 7 of the containment body 5 and preferably connected to an electric motor 27 externally fixed to the rear wall 7.

In accordance with a further embodiment not illustrated in the enclosed figures, the oven 1 comprises multiple fans 9, e.g. two fans 9, arranged at different heights within the heating chamber 6, in particular on top of each other, vertically aligned and each fixed to a corresponding drive shaft 27 placed to cross the rear wall 7 of the containment body 5 and in turn fixed to a corresponding electric motor 27 externally fixed to the rear wall 7.

Of course, the oven 1 can also comprise three or more fans 9, without departing from the protective scope of the present patent.

In accordance with the embodiment illustrated in the enclosed figures, the rear wall 7, at which the fan 9 is arranged, is placed as a rear closure of the containment body 5. In accordance with a different non-illustrated embodiment, the rear wall 7 on which the fan 9 is positioned is obtained with one of the lateral walls 23 of the containment body 5.

Advantageously, each fan 9 is extended along its rotation axis X between a rear side, directed towards the rear wall 7, and an opposite front side through which the fan 9 is adapted to suction the internal air flow. In addition, the fan 9 is provided with a peripheral side, which is extended around the rotation axis X between the front side and the rear side and through which the fan 9 is adapted to convey, in delivery, the internal air flow.

Preferably, the fan 9 is positioned with its rear side adjacent to and facing the rear wall 7.

Advantageously, the fan 9 comprises a support plate placed as an at least partial closure of the rear side of the fan 9 itself. In particular, the support plate bears a hub centrally fixed thereto, such hub fixed to the drive shaft 28 actuatable for moving the fan 9.

The fan 9 preferably comprises multiple blades arranged around the rotation axis X and in particular projectingly fixed on the support plate.

Advantageously, the blades of the fan 9 are arranged around the rotation axis X equidistant from the latter, preferably along a circular trajectory, and are in particular regularly distributed around the rotation axis X itself.

Preferably, the blades are separated from each other by delivery slits made along the peripheral side of the fan 9, and through such delivery slits the air of the internal air flow is radially insufflated under pressure, as described in detail hereinbelow.

Advantageously, the oven 1 comprises heating means (per se known to the man skilled in the art and not illustrated in the enclosed figures) operatively associated with the heating chamber 6 in order to heat the air inside the latter. In particular, the heating means are at least partially arranged in the heating chamber 6, and are adapted to intercept the air flow generated in delivery by the fan 9 in order to heat the air itself.

Advantageously, the heating means of the oven 1 comprise at least one electrical heating element with substantially circular form and arranged around the peripheral side of the fan 9, so as to intercept the air that exits under pressure from the delivery slits of the fan 9 itself, so as to transfer the heat to the air of the internal air flow in order to heat it.

In accordance with a different embodiment, the heating means comprise a gas burner provided with one or more radiant tubes arranged within the heating chamber 6 alongside the fans 9 or around the latter in order to intercept the air that exits from the delivery slits of the fans 9 themselves.

The oven 1 for cooking foods, object of the present invention, also comprises a dividing separator 8, housed inside the heating chamber 6 and facing the fan 9, to separate a cooking space 12, in which the foods to be cooked are intended to be arranged, from a ventilation space 11, which is defined between the dividing separator 8 and the rear wall 7 and in which the fan 9 is arranged.

The dividing separator 8 is provided with at least one suction opening 10, through which the fan 9 is adapted to suction the internal air flow from the cooking space 12.

The dividing separator 8 also delimits, in the ventilation space 11, a suction partition 13 which is placed in a position adjoining the fan 9 and feeds the fan 9 with said internal air flow through said suction opening 10, and a delivery partition 14, which is placed in a distal position with respect to said fan 9, and receives said internal air flow forced by said fan 9 itself.

Advantageously, the dividing separator 8 is extended in the heating chamber 6 between the upper wall 25 and the lower wall 26 of the containment body 5 according to a substantially vertical extension direction Y, preferably parallel to the rear wall 7 and orthogonal to the upper wall 25 and to the lower wall 26 themselves.

Advantageously, the foods are intended to be arranged in the cooking space 12 of the heating chamber 6 positioned in multiple pans, arranged on top of each other at different elevations along the height of the heating chamber 6 itself. The pans are for example supported by a pan-holder trolley or by brackets projecting into the cooking space 12 from the lateral walls 23 of the containment body 5.

Preferably, the dividing separator 8 is provided with multiple aforesaid suction openings 10 which are distributed in succession at least along the vertical extension direction Y. Advantageously, the suction openings 10 of the dividing separator 8 are distributed along the extension direction Y of the latter substantially along the entire height of the heating chamber 6.

In accordance with the preferred embodiment illustrated in the enclosed figures, the ventilation space 11 of the heating chamber 6 of the oven 1 comprises a suction partition 13, which receives the internal air flow suctioned by the fan 9 through the suction opening 10 in a position adjoining the fan 9, and a delivery partition 14, which is under pressure, receiving the internal air flow forced by the fan 9 and provided in a distal position with respect to the fan 9 itself, preferably beyond the suction zone 13, towards the lateral walls 23 of the containment body 5.

Advantageously, the suction partition 13 is defined between the rear wall 7 and the dividing separator 8, it houses the at least one fan 9 and is provided with the at least one suction opening 10.

In accordance with the preferred embodiment illustrated in the enclosed figures, the dividing separator 8 defines, with two lateral walls 23 of the containment body 5, two opposite ventilation slits 24.

The delivery partition 14 of the ventilation space 11 remains advantageously defined between the suction partition 13 and the ventilation slits 24.

In accordance with the invention, the oven 1 also comprises drying means 15 associated with the heating chamber 6 in order to dry the air inside the heating chamber 6, comprising at least one supply duct 16 for an external air flow, placed in fluid communication with the heating chamber 6 by crossing a first opening 17 made on the containment body 5.

In accordance with the preferred embodiment illustrated in the enclosed figures, the drying means 15 comprise at least one ventilator 21 placed to intercept the supply duct 16 and adapted to inject the external air flow inside the heating chamber 6.

More in detail, the ventilator 21 of the drying means 15 is housed inside a box-like body placed to intercept the supply duct 16. Such box-like body at its interior also houses means for moving the ventilator 21, such as a second electric motor.

The oven 1 also comprises evacuation means 18 associated with the heating chamber 6 for evacuating the internal air flow, comprising at least one evacuation duct 19 placed in fluid communication with the heating chamber 6 by crossing a second opening 20 made on the containment body 5.

In a per se known manner, the evacuation duct 18 is connected to a fumes disposal and cleaning plant, or it is connected to a stack for dispersing the air exiting from the oven 1 into the outside environment.

According to the idea underlying the present invention, the supply duct 16 of the drying means 15 crosses the ventilation space 11 of the heating chamber 6 and terminates with a third opening 30 made on the dividing separator 8 at the suction partition 13.

In addition, the evacuation duct 19 of the evacuation means 18 crosses the ventilation space 11 of the heating chamber 6 and terminates with a fourth opening 31 made on the dividing separator 8 at the suction partition 13.

In operation, with the ventilator 21 of the drying means 15 turned on and hence adapted to inject the external air flow inside the heating chamber 6, a pressure difference is formed between the first opening 17 and the second opening 20 due to the pressure of the air thrust by the ventilator 21 itself, or, in other words, due to the prevalence of the ventilator 21 of the drying means 15.

The cooking chamber, in normal use with the fan 9 operating, is situated at an average pressure with respect to which the suction partition 13 is at lower pressure and the delivery partition 14 is at higher pressure.

In this manner, the air of the external air flow is initially suctioned by the fan 9 and sent towards the cooking chamber, passing through the delivery partition 14 of the ventilation space 11, in order to then be expelled by the evacuation means 18 through the fourth opening 31 made on the dividing separator 8.

Otherwise, with the ventilator 21 of the drying means 15 turned off, there is no substantial pressure difference between the third opening 30 and the fourth opening 31 and therefore there is no outflow of air through the evacuation duct 19 of the evacuation means 18, not even if there were draughts of external air due to a non-optimal sealing of the containment body 5 and/or of the support structure 2.

In addition, the external air flow introduced into the heating chamber 6 by means of the drying means 15, before reaching the cooking space 12, is forcibly suctioned by the fan 9 and forced to hit the heating means (not illustrated in the enclosed figures and per se well-known to the man skilled in the art), increasing its temperature.

In this manner, the external air flow reaches the foods to be cooked already at high temperature, without running the risk of cooling the foods themselves, ensuring an optimal cooking thereof.

In order to form a suction partition 13 of the ventilation space 11 at substantially constant pressure, and in particular at low pressure with respect to the delivery partition 14, maintaining a substantially constant pressure difference throughout its vertical extension, the dividing separator 8 is provided with multiple suction openings 10 which are distributed in succession at least along the vertical extension direction Y.

Preferably, the suction openings 10 of the dividing separator 8 are each provided with a different width along the extension direction Y and are configured in order to give a resistance to the internal air flow suctioned by the fan 9 that is variable along the vertical extension direction Y.

Advantageously, the resistance to the internal air flow (suctioned by each fan 9) of the dividing separator 8 decreases in moving away from the rotation axis X of each fan 9.

In particular, with the expression "resistance to the air flow" it is intended the capacity of the dividing separator 8 to oppose the passage of the internal air flow suctioned by the fans 9 from the cooking space 12 to the ventilation space 11, involving load loss of the internal air flow in the passage through the suction openings 10 of the dividing separator 8 itself.

The aforesaid configuration of the suction openings 10 of the dividing separator 8 allows making the flow rate of the internal air flow substantially uniform in the cooking space 12 along the entire height of the latter and, hence, making the flow rate of the internal air flow uniform at the different levels at which the pans containing the foods to be cooked are intended to be arranged. Even if such foods are arranged at different levels along the height of the cooking space 12, each food receives a substantially equal amount of heat from the air flow with respect to the other foods, therefore ensuring a uniform cooking of the foods themselves.

In addition, a constant air flow suctioned by the fans 9 along the vertical extension Y generates, in the suction partition 13 of the ventilation space 11, a substantially constant pressure along the entire vertical extension Y.

In this manner, it is possible to position the third opening 30 of the drying means 15 and the fourth opening 31 of the evacuation means 18 at any point of the dividing separator 8 at the suction partition 13, since the pressure difference with respect to the delivery partition 14 is substantially constant.

More in detail, the configuration of the suction openings 10 involves greater resistance to the air flow of the dividing separator 8 at the zones of the cooking space 12 at the same height as the fans 9, limiting the quantity of air suctioned by the fans 9 in such zones, while the dividing separator 8 has a lesser resistance to the air flow at the zones of the cooking space 12 at heights different from those of the fans 9, involving a lower resistance to the suction of the fans 9 at the latter zones.

Since each fan 9 tends to generate a flow with greater flow rate at the zone in front of it, and with lower flow rate at the zones at different heights, the greater resistance to the air flow of the dividing separator 8 in front of the fans 9, and the lower resistance to the air flow of the dividing separator 8 at the zones at different heights, cause a flow with substantially uniform flow rate along the entire height of the cooking space 12. Advantageously, the dividing separator 8 comprises a shaped plate 29, on which second suction openings 10' are made. The shaped plate 29 projects from a central portion 32 of the dividing separator 8 towards the cooking space 12 in a position substantially facing the fan 9 and defines, with the central portion 32, the suction partition 13.

In this manner, the suction partition 13, which remains defined between the central portion 32 of the dividing separator 8 and the shaped plate 29, is substantially a duct or a chamber interposed between the cooking space 12 and the fan 9.

In accordance with the preferred embodiment illustrated in the enclosed figures, the shaped plate 29 is fixed to the dividing separator 8 by means of welding.

Otherwise, in accordance with a further embodiment not illustrated in the enclosed figures, the shaped plate 29 of the dividing separator 8 is integrally made with the latter and the second suction openings 10' are advantageously obtained by means of punching.

In accordance with the preferred embodiment illustrated in the enclosed figures, the dividing separator 8 comprises a main plate on which a suction opening 10 is made which is substantially circular and facing the fan 9. The dividing separator 8 also comprises the aforesaid shaped plate 29 (provided with the aforesaid second suction openings 10' with different extension along the vertical extension direction Y) fixed to the main plate at a central portion 32 of the main plate of the dividing separator 8 itself. Also the shaped plate 29 faces the fan 9 in order to allow making the pressure uniform between the shaped plate 29 and the main plate.

In this situation, the third opening 30 of the drying means 15 and the fourth opening 31 of the evacuation means 18 are made on the main plate of the dividing separator 8, and they face the shaped plate 29 of the dividing separator 8 itself at the suction partition 13 of the ventilation space 11.

Advantageously, the oven 1, object of the present invention, comprises at least one first baffle 22 housed inside the heating chamber 6 substantially facing the third opening 30, adapted to deflect the external air flow towards the suction partition 13, from which the external air flow is suctioned by the fan 9.

In this manner, the first baffle 22 slows the external air flow injected by the ventilator 21 of the drying means and forces the suction thereof by the fan 9, in order to ensure its passage by the heating means.

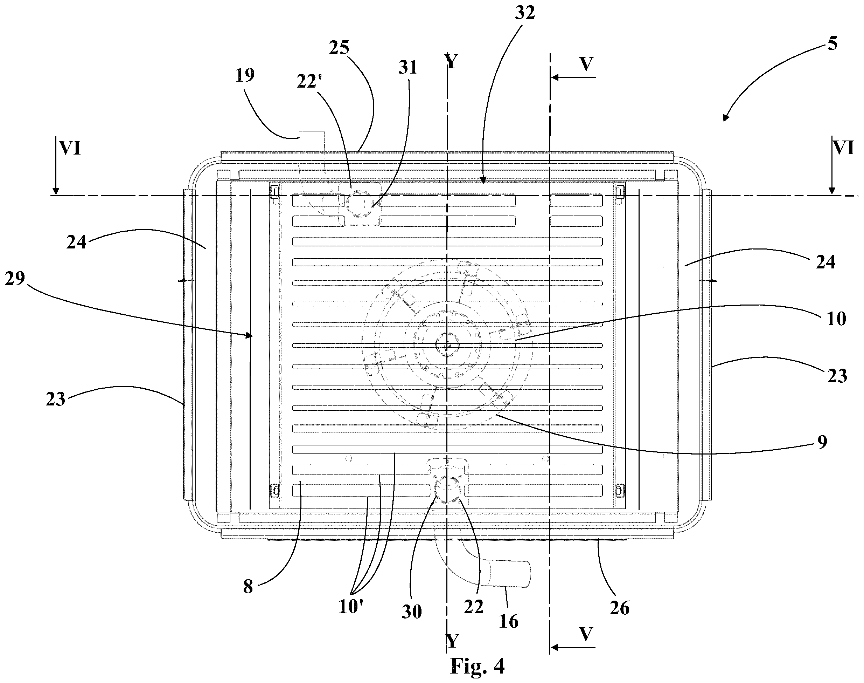

In accordance with the preferred embodiment illustrated in the enclosed figures, and with particular reference to the enclosed figure 4, the first baffle 22 is integrally made with the dividing separator 8 and in particular is integrally made with the shaped plate 29 of the dividing separator 8.

Advantageously, the oven 1 also comprises a second baffle 22' housed inside the heating chamber 6 substantially facing the fourth opening 31 and adapted to slow the air flow exiting from said evacuation duct 19.

More in detail, the second baffle 22' is interposed between the cooking space 12 and the evacuation duct 19, hence it prevents the outflow of air inside the heating chamber 6 towards the outside, if not due to an increase of air pressure within the cooking space 12.

Preferably, the third opening 30 of the drying means 15 is substantially made below the at least one fan 9 and the fourth opening 31 of the evacuation means 18 is substantially made above the at least one fan 9.

In particular, the third opening 30 of the drying means 15 is centered substantially aligned with the drive shaft 28 of the fan 9 along the vertical direction Y, while the fourth opening 31 of the evacuation means 18 is lateral with respect to the fan 9.

The invention thus described therefore attains the pre-established objects.

In particular, the oven 1, object of the present invention, allows uniformly cooking foods, ensuring a precise adjustment of the humidity within the heating chamber by means of the position of the third opening 30 of the drying means 15 and of the fourth opening 31 of the evacuation means 18 at the suction partition 13 of the ventilation space 11 of the heating chamber 6, since the introduced air is forced to be suctioned by the fan 9 and hence hit the heating means, preventing the risk of cooling the foods to be cooked.

In addition, the oven 1, object of the present invention, allows maintaining an optimal seal of the containment body 5 for the air contained at its interior during cooking with the ventilator 21 of the drying means 15 turned off, since the fourth opening 31 of the evacuation means 18 is placed at the suction partition 13 of the ventilation space 11, in low-pressure conditions with respect to the delivery partition 14 of the ventilation space 11.

## Claims

1. Oven for cooking foods, which comprises:
- a containment body (5), which defines a heating chamber (6) and is provided with a rear wall (7);
- at least one fan (9) susceptible of rotating around a rotation axis (X), arranged in said heating chamber (6) and rotatably supported by a drive shaft (28) placed to cross said rear wall (7), in order to generate at least one air flow within said heating chamber (6);
- a dividing separator (8), housed inside said heating chamber (6) and facing said fan (9), to separate a cooking space (12), in which the foods to be cooked are intended to be arranged, from a ventilation space (11), which is defined between said dividing separator (8) and said rear wall (7) and in which said fan (9) is arranged; said dividing separator (8) being provided with at least one suction opening (10, 10'), through which said fan (9) is adapted to suction said internal air flow from cooking space (12); said dividing separator (8) also delimiting in said ventilation space (11):
- a suction partition (13) which is placed in a position adjoining said fan (9) and feeds said fan (9) with said internal air flow through said suction opening (10, 10');
- and a delivery partition (14), which is placed in a distal position with respect to said fan (9), and receives said internal air flow forced by said fan (9) itself;
- drying means (15) associated with said heating chamber (6) in order to dry the air inside said heating chamber (6), comprising at least one supply duct (16) for supplying an external air flow, placed in fluid communication with said heating chamber (6) by crossing a first opening (17) made on said containment body (5);
- evacuating means (18) associated with said heating chamber (6) in order to evacuate said internal air flow, comprising at least one evacuation duct (19) placed in fluid communication with said heating chamber (6) by crossing a second opening (20) made on said containment body (5);
said oven being **characterized in that:**
- said supply duct (16) crosses said ventilation space (11) and terminates with a third opening (30) made on said dividing separator (8) at said suction partition (13);
- said evacuation duct (19) crosses said ventilation space (11) and terminates with a fourth opening (31) made on said dividing separator (8) at said suction partition (13).

2. Oven according to claim 1, **characterized in that** said drying means (15) comprise at least one ventilator (21) placed to intercept said supply duct (16) and adapted to inject said external air flow inside said heating chamber (6).

3. Oven according to claim 1 or 2, **characterized in that** it comprises at least one first baffle (22) housed inside said heating chamber (6) and substantially facing said third opening (30), adapted to slow said external air flow in order to facilitate its suction by said fan (9).

4. Oven according to claim 3, **characterized in that** said baffle (22) is integrally made with said dividing separator (8).

5. Oven according to any one of the preceding claims, **characterized in that** said dividing separator (8) is provided with multiple said suction openings (10, 10') which are distributed in succession at least along a vertical extension direction (Y).

6. Oven according to claim 5, **characterized in that** said suction openings (10, 10') are each provided with a different width along the extension direction (Y), configured in order to give a resistance to the internal air flow suctioned by said fan (9) that is variable along the vertical extension direction (Y).

7. Oven according to any one of the preceding claims, **characterized in that** said dividing separator (8) comprises a shaped plate (29) on which said suction openings (10, 10') are made; said shaped plate (29) projecting from a central portion (32) of said dividing separator (8) towards said cooking space (12) in a position substantially facing said fan (9) and defining, with said central portion (32), said suction partition (13).

8. Oven according to any one of the preceding claims, **characterized in that** said dividing separator (8) defines, with two lateral walls (23) of said containment body, two opposite ventilation slits (24);
said delivery partition (14) of said ventilation space (11) remaining defined between said suction partition (13) and said ventilation slits (24).

9. Oven according to any one of the preceding claims, **characterized in that** said third opening (30) of said drying means (15) is substantially made below said at least one fan (9) and said second opening (20) of said evacuating means (18) is substantially made above said at least one fan (9).

10. Oven according to any one of the preceding claims, **characterized in that** said suction partition (13) is defined between said rear wall (7) and said dividing separator (8), it houses said at least one fan (9) and is provided with said at least one suction opening (10).

11. Oven according to claim 1 or 2, **characterized in that** it comprises at least one second baffle (22') housed inside said heating chamber (6) and substantially facing said fourth opening (31), adapted to slow the air flow exiting from said evacuation duct (19).

## Patentansprüche

1. Ofen zum Kochen von Lebensmitteln, der Folgendes umfasst:
- einen Aufnahmekörper (5), der eine Wärmekammer (6) definiert und mit einer Rückwand (7) ausgestattet ist;
- mindestens ein Gebläse (9), das geeignet ist, um eine Drehachse (X) zu drehen und in der genannten Wärmekammer (6) von einer als Überquerung der genannten Rückwand (7) positionierten Motorwelle (28) drehbar gelagert ist, um mindestens einen Innenluftstrom in der genannten Wärmekammer (6) zu erzeugen;
- eine dem genannten Gebläse (9) gegenüberliegende, im Inneren der genannten Wärmekammer (6) untergebrachte Trennwand (8) zum Trennen eines Garraums (12), in dem die zu kochenden Lebensmittel angeordnet werden sollen, von einem Belüftungsraum (11), der zwischen der genannten Trennwand (8) und der genannten Rückwand (7) definiert ist und in dem das genannte Gebläse (9) angeordnet ist; wobei die genannte Trennwand (8) mit mindestens eine Ansaugöffnung (10, 10') ausgestattet ist, über die das genannte Gebläse (9) geeignet ist, den genannten inneren Luftstrom aus dem Garraum (12) anzusaugen; wobei die genannte Trennwand (8) außerdem in dem genannten Belüftungsraum (11) Folgendes begrenzt:
- eine in einer Position neben dem genannten Gebläse (9) untergebrachte Ansaugunterteilung (13), die das genannte Gebläse (9) mit dem genannten Innenluftstrom über die genannte Ansaugöffnung (10, 10') versorgt;
- und eine in einer im Verhältnis zu dem genannten Gebläse (9) distalen Position untergebrachte Zuleitungsunterteilung (14), die den von dem genannten Gebläse (9) erzeugten Innenluftstrom erhält;
- mit der genannten Wärmekammer (6) zum Trocknen der Luft im Inneren der genannten Wärmekammer (6) verbundene Trocknungselemente (15), die mindestens einen mit der genannten Wärmekammer (6) strömungstechnisch verbundenen Zuleitungsschacht (16) für einen Außenluftstrom umfassen, der eine erste Öffnung (17) auf dem genannten Aufnahmekörper (5) überquert;
- mit der genannten Wärmekammer (6) zum Ableiten des genannten Innenluftstroms verbundene Ableitelemente (18), die mindestens einen mit der genannten Wärmekammer (6) strömungstechnisch verbundenen Ableitschacht (19) umfassen, der eine zweite Öffnung (20) auf dem genannten Aufnahmekörper (5) überquert;
wobei der Ofen **dadurch gekennzeichnet ist, dass**:
- der genannte Zuleitungsschacht (16) den genannten Belüftungsraum (11) überquert und mit einer dritten Öffnung (30) auf der genannten Trennwand (8) bei der genannten Ansaugunterteilung (13) endet;
- der genannte Ableitschacht (19) den genannten Belüftungsraum (11) überquert und mit einer vierten Öffnung (31) auf der genannten Trennwand (8) bei der genannten Ansaugunterteilung (13) endet;

2. Ofen nach Anspruch 1, **dadurch gekennzeichnet, dass** die genannten Trocknungselemente (15) mindestens einen Ventilator (21) zum Abzweigen des genannten Zuleitungsschacht (16) umfassen, der geeignet ist, den genannten Außenluftstrom in das Innere der genannten Wärmekammer (6) einzuleiten.

3. Ofen nach Anspruch 1 oder 2, **dadurch gekennzeichnet, dass** er mindestens ein im Inneren der genannten Wärmekammer (6) untergebrachtes, der genannten dritten Öffnung (30) im Wesentlichen gegenüberliegendes erstes Luftleitblech (22) umfasst, das geeignet ist, den genannten Außenluftstrom zu verlangsamen, um seine Ansaugung durch das genannte Gebläse (9) zu erleichtern.

4. Ofen nach Anspruch 3, **dadurch gekennzeichnet, dass** das genannte Luftleitblech (22) in einem Stück mit der genannten Trennwand (8) hergestellt ist.

5. Ofen nach einem beliebigen der vorangegangenen Ansprüche, **dadurch gekennzeichnet, dass** die genannte Trennwand (8) mit mehreren der genannten Ansaugöffnungen (10, 10') ausgestattet ist, die der Reihe nach mindestens entlang einer vertikalen Verlaufsrichtung (Y) verteilt sind.

6. Ofen nach Anspruch 5, **dadurch gekennzeichnet, dass** die genannten Ansaugöffnungen (10, 10') jeweils mit einer unterschiedlichen Breite entlang der Verlaufsrichtung (Y) ausgestattet und darauf ausgelegt sind, dem von dem genannten Gebläse (9) angesaugten Innenluftstrom einen entlang der vertikalen Verlaufsrichtung (Y) variablen Widerstand zu verleihen.

7. Ofen nach einem beliebigen der vorangegangenen Ansprüche, **dadurch gekennzeichnet, dass** die genannte Trennwand (8) eine Profilplatte (29) umfasst, auf der die genannten Ansaugöffnungen (10, 10') angebracht sind; wobei die genannte Profilplatte (29) von einem mittleren Abschnitt (32) der genannten Trennwand (8) zu dem genannten Garraum (12) in im Wesentlichen zu dem genannten Gebläse (9) gegenüberliegender Position vorsteht und mit diesem mittleren Abschnitt (32) die genannte Ansaugunterteilung (13) definiert.

8. Ofen nach einem beliebigen der vorangegangenen Ansprüche, **dadurch gekennzeichnet, dass** die genannte Trennwand (8) mit zwei Seitenwänden (23) des genannten Aufnahmekörpers zwei gegenüberliegende Belüftungsschlitze (24) definiert;
wobei die genannte Zuleitungsunterteilung (14) des genannten Belüftungsraums (11) zwischen der genannten Ansaugunterteilung (13) und den genannten Belüftungsschlitzen (24) definiert liegt.

9. Ofen nach einem beliebigen der vorangegangenen Ansprüche, **dadurch gekennzeichnet, dass** die genannte dritte Öffnung (30) der genannten Trocknungselemente (15) im Wesentlichen unter dem genannten mindestens einen Gebläse (9) eingerichtet ist und die genannte zweite Öffnung (20) der genannten Ableitelemente (18) im Wesentlichen über dem genannten mindestens einen Gebläse (9) eingerichtet ist.

10. Ofen nach einem beliebigen der vorangegangenen Ansprüche, **dadurch gekennzeichnet, dass** die genannte Ansaugunterteilung (13) zwischen der genannten Rückwand (7) und der genannten Trennwand (8) definiert ist, das genannte mindestens eine Ventil (9) unterbringt und mit der genannten mindestens einen Ansaugöffnung (10) ausgestattet ist.

11. Ofen nach Anspruch 1 oder 2, **dadurch gekennzeichnet, dass** er mindestens ein im Inneren der genannten Wärmekammer (6) untergebrachtes, der genannten vierten Öffnung (31) im Wesentlichen gegenüberliegendes zweites Luftleitblech (22') umfasst, das geeignet ist, den aus dem genannten Ableitschacht (19) kommenden Luftstrom zu verlangsamen.

## Revendications

1. Four de cuisson pour aliments comprenant :
- un corps de confinement (5) qui délimite une chambre de chauffage (6) et est muni d'une paroi arrière (7) ;
- au moins un ventilateur (9) susceptible de tourner autour d'un axe de rotation (X), placé dans ladite chambre de chauffage (6) soutenu de façon tournante par un arbre moteur (28) placé de façon à traverser ladite paroi arrière (7) pour générer au moins un flux d'air intérieur à ladite chambre de chauffage (6) ;
- une cloison de séparation (8), logée à l'intérieur de ladite chambre de chauffage (6) placée en vis à vis dudit ventilateur (9) pour séparer un compartiment de cuisson (12), dans lequel les aliments à cuire sont destinés à y être placés, d'un compartiment de ventilation (11), lequel est délimité par ladite cloison de séparation (8) et ladite paroi arrière (7) et dans lequel ledit ventilateur (9) est placé ; ladite cloison de séparation (8) étant dotée d'au moins une ouverture d'aspiration (10, 10'), à travers laquelle ledit ventilateur (9) est apte à aspirer ledit flux d'air intérieur du compartiment de cuisson (12) ; ladite cloison de séparation (8) délimitant en outre dans ledit compartiment d'aspiration (11) :
- un séparateur d'aspiration (13) placé en position contiguë audit ventilateur (9) et alimentant ledit ventilateur en ledit flux d'air intérieur à travers ladite ouverture d'aspiration (10, 10') ;
- et un séparateur de refoulement (14) placé en position distale par rapport audit ventilateur (9) et recevant ledit flux d'air intérieur forcé par ledit ventilateur (9) :
- des moyens de dessiccation (15) associés à ladite chambre de chauffage (6) pour dessecher l'air à l'intérieur de ladite chambre de chauffage (6) comprenant au moins un conduit d'adduction (16) pour un flux d'air extérieur, mis en communication de fluide avec ladite chambre de chauffage (6) passant au travers d'une première ouverture (17) réalisée sur ledit corps de confinement (5) ;
- des moyens d'évacuation (18) associés à ladite chambre de chauffage (6) pour évacuer ledit flux d'air intérieur, comprenant au moins un conduit d'évacuation (19) mis en communication de fluide avec ladite chambre de chauffage (6) passant au travers d'une deuxième ouverture (20) réalisée sur ledit corps de confinement (5) ;
ledit four étant **caractérisé en ce que** :
- ledit conduit d'adduction (16) passe au travers dudit compartiment de ventilation (11) et se termine avec une troisième ouverture (30) réalisée sur ladite cloison de séparation (8) au niveau dudit séparateur d'aspiration (13) ;
- ledit conduit d'évacuation (19) passe au travers dudit compartiment de ventilation (11) et se termine avec une quatrième ouverture (31) réalisée sur ladite cloison de séparation (8) au niveau dudit séparateur d'aspiration (13).

2. Four selon la revendication 1, **caractérisé en ce que** lesdits moyens de dessiccation (15) comprennent au moins un ventilateur (21) posé pour intercepter ledit conduit d'adduction (16) et apte à injecter ledit flux d'air extérieur à l'intérieur de ladite chambre de chauffage (6).

3. Four selon la revendication 1 ou 2, **caractérisé en ce qu'**il comprend au moins un premier déflecteur (22) logé à l'intérieur de ladite chambre de chauffage (6) essentiellement placé en vis à vis de ladite troisième ouverture (30), apte à ralentir ledit flux d'air extérieur pour faciliter son aspiration par ledit ventilateur (9).

4. Four selon la revendication 3, **caractérisé en ce que** ledit déflecteur (22) est réalisé en corps unique avec ladite cloison de séparation (8).

5. Four selon l'une quelconque des revendications précédentes, **caractérisé en ce que** ladite cloison de séparation (8) est munie de plusieurs desdites ouvertures d'aspiration (10, 10') lesquelles sont distribuées les unes après les autres le long d'une direction de développement vertical (Y).

6. Four selon la revendication 5, **caractérisé en ce que** lesdites ouvertures d'aspiration (10, 10') sont munies chacune d'une différente ampleur le long de la direction de développement (Y), configurées pour fournir une résistance au flux d'air intérieur aspiré par ledit ventilateur (9) variable le long de la direction de développement vertical (Y).

7. Four selon l'une quelconque des revendications précédentes, **caractérisé en ce que** ladite cloison de séparation (8) comprend une plaque façonnée (29) sur laquelle sont réalisées lesdites ouvertures d'aspiration (10, 10') ; ladite plaque façonnée (29) dépassant d'une partie centrale (32) de ladite cloison de séparation (8) vers ledit compartiment de cuisson (12) en position essentiellement en vis à is dudit ventilateur (9) et définissant par ladite partie centrale (32) ledit séparateur d'aspiration (13).

8. Four selon l'une quelconque des revendications précédentes, **caractérisé en ce que** ladite cloison de séparation (8) définit avec deux parois latérales (23) dudit corps de confinement deux fentes de ventilation opposées (24) ;
ledit séparateur de refoulement (14) dudit compartiment de ventilation (11) restant défini entre ledit séparateur d'aspiration (13) et lesdites fentes de ventilation (24).

9. Four selon l'une quelconque des revendications précédentes, caractérisé en que ladite troisième ouverture (30) desdits moyens de dessiccation (15) est réalisée essentiellement au-dessous dudit au moins un ventilateur (9) et ladite deuxième ouverture (20) desdits moyens d'évacuation (18) est réalisée essentiellement au-dessus dudit au moins un ventilateur (9).

10. Four selon l'une quelconque des revendications précédentes, **caractérisé en ce que** ledit séparateur d'aspiration (13) est défini entre ladite paroi arrière (7) et ladite cloison de séparation (8), loge au moins un ventilateur (9) et est dotée de ladite au moins une ouverture d'aspiration (10).

11. Four selon la revendication 1 ou 2, **caractérisé en ce qu'**il comprend au moins un deuxième déflecteur (22) logé à l'intérieur de ladite chambre de chauffage (6) essentiellement placé en vis à vis de ladite quatrième ouverture (31), apte à ralentir ledit flux d'air en sortie dudit conduit d'évacuation (19).
